# FASCICULE DE BREVET EUROPEEN

(11) **EP 0 872 202 B1**
(45) Date de publication et mention de la délivrance du brevet: **22.05.2002**
(21) Numéro de dépôt: 98400442.4
(22) Date de dépôt: 24.02.1998
(51) Int. Cl.: A47J 37/10

(54) **Poêle à marrons**
Kastanienpfanne
Chestnuts pan

(30) Priorité: 18.04.1997 FR 9704827
(43) Date de publication de la demande: 21.10.1998
(73) Titulaire: De Buyer, 88340 Le Val d'Ajol (FR)
(72) Inventeur: De Buyer, Hervé, 88340 Le Val D'Ajol (FR)
(74) Mandataire: Cabinet HERRBURGER

(56) Documents cités:
- BE-A- 532 236
- FR-A- 815 631
- FR-A- 2 592 783
- GB-A- 372 025
- GB-A- 2 262 702
- US-A- 3 987 719

## Description

La présente invention concerne une poêle à marrons, c'est-à-dire un ustensile culinaire permettant de faire griller des châtaignes.

Les poêles à marrons traditionnelles qui sont bien connues depuis des décennies, sont constituées par un ustensile métallique (généralement en fonte ou en acier) peu profond et comportant un fond sur lequel sont répartis des perçages ayant un diamètre de l'ordre du centimètre, ce fond étant entouré par une paroi périphérique pleine continue de faible hauteur.

De telles poêles sont destinées à être utilisées dans une cheminée, ou sur un appareil fonctionnant au charbon de bois de sorte que les marrons soient grillés sous l'action du rayonnement infrarouge dégagé par les braises sans bien entendu être en contact direct avec une flamme.

Il va de soi que de telles poêles ne peuvent pas être utilisées sur les plaques de cuisson dont disposent généralement les ménagères, en particulier sur les plaques électriques, en vitrocéramique, et a fortiori sur les brûleurs à gaz vu que les cosses des marrons seraient immédiatement calcinées et donc impropres à la consommation.

La présente invention a pour but de remédier à cet inconvénient en proposant une poêle à marrons permettant de faire griller des marrons (châtaignes) sur toutes les sources de chaleur y compris le gaz.

Selon l'invention, une telle poêle est caractérisée en ce qu'elle est constituée par un ustensile métallique peu profond comportant un fond plein entouré d'une paroi munie de perçages répartis sur la totalité de sa périphérie et situés à proximité immédiate du fond.

Un tel ustensile qui peut être réalisé en tôle d'acier bleuie ou autre matériau peut bien entendu sans sortir du cadre de l'invention avoir des dimensions quelconques, et être équipé d'un manche, de deux anses, ou même le cas échéant d'aucun organe de préhension.

La caractéristique essentielle de cette poêle est liée à la présence des perçages périphériques qui doivent être dimensionnés et répartis de façon à pouvoir être « léchés » par une flamme, en particulier la flamme d'un réchaud à gaz sans pénétration de celle-ci à la partie interne de la poêle, ce qui permet de récupérer le rayonnement infrarouge de la flamme, sans contact direct avec celle-ci. Les marrons sont donc ainsi complétés dans leur cuisson par l'action de la réverbération du rayonnement infrarouge introduit par les perçages périphériques.

Il est bien entendu essentiel de faire en sorte que les perçages ne soient pas trop grands pour exclure toute pénétration d'une flamme, mais parallèlement suffisants pour pouvoir diffuser le rayonnement infrarouge et créer autour des marrons une ventilation par appel d'air de nature à permettre une cuisson régulière.

L'expérience a montré que des perçages ayant un diamètre de l'ordre de 1 à 3 mm permettent d'obtenir un grillage satisfaisant.

Bien entendu, les perçages peuvent avoir une forme quelconque (non circulaire) sans pour cela sortir du cadre de l'invention.

Par ailleurs, on a pu se rendre compte, conformément à l'invention qu'il est avantageux de disposer les perçages en quinconce.

Selon une autre caractéristique de l'invention, les perçages sont répartis en séries, chaque série comportant un perçage central entouré de six perçages périphériques.

Selon une autre caractéristique de l'invention, dans chaque série, les perçages périphériques sont éloignés de 1 à 3 mm du perçage central tandis que les séries de perçages sont distantes les unes des autres de 1 à 3 cm.

Selon une caractéristique préférentielle de l'invention, le fond de la poêle n'est pas plan, mais est muni de bossages ; par suite les marrons ne sont pas en contact direct avec le fond de la poêle sur toute leur surface, et peuvent se déplacer en roulant lorsque l'on remue celle-ci, ce qui permet d'obtenir une meilleure ventilation et un grillage plus régulier des marrons sur la totalité de leur périphérie.

Selon l'invention, les bossages peuvent avantageusement être constitués par des nervures type « grill » qui permettent d'obtenir une circulation d'air chaud dans l'interstice situé entre le fond et les marrons, de façon à améliorer la ventilation.

Selon une autre caractéristique préférentielle de l'invention, le fond est muni de nervures circulaires concentriques distantes d'environ 1 à 2 cm.

De telles nervures permettent d'éviter que les marrons se rassemblent et s'agglutinent à un endroit déterminé lorsque la source de chaleur n'est pas parfaitement plane.

Les caractéristiques de la poêle à marrons qui fait l'objet de l'invention seront décrites plus en détail en se référant aux dessins annexés dans lesquels :
- la figure 1 représente une poêle à marrons traditionnelle,
- la figure 2 représente la poêle à marrons conforme à l'invention.

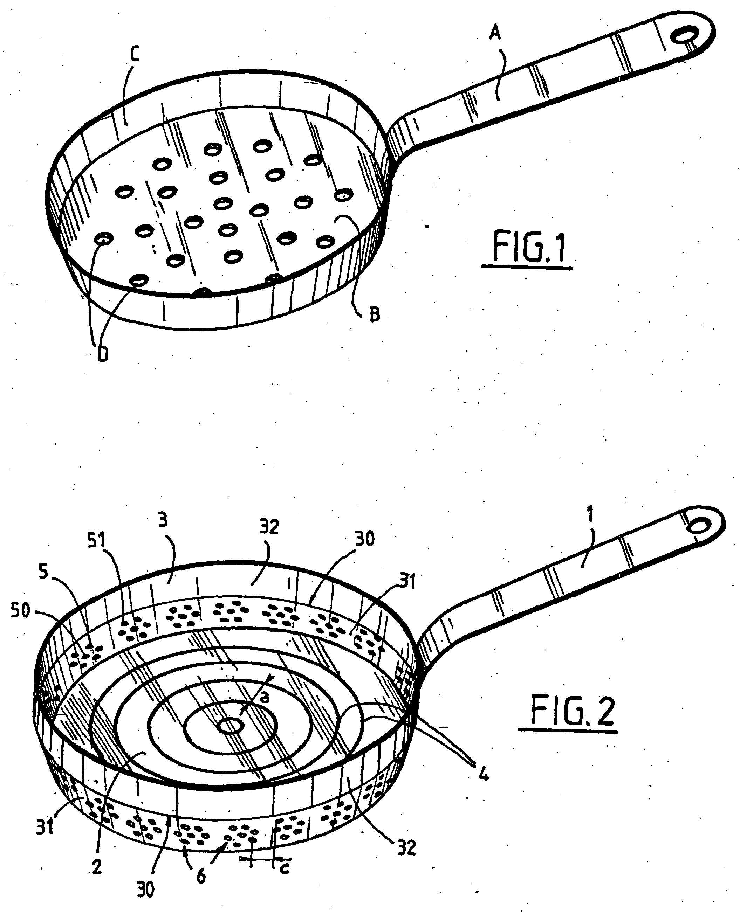

Selon la figure 1, la poêle à marrons traditionnelle est un ustensile peu profond muni d'un manche A ainsi que d'un fond B destiné à être placé sur un appareil de cuisson fonctionnant au charbon de bois ou une source de chaleur à rayonnement infrarouge et entouré sur toute sa périphérie par une paroi continue C de faible hauteur.

Le fond B est équipé de perçages D ayant un diamètre de l'ordre du centimètre uniformément répartis sur la totalité de sa surface. Le rôle de ces perçages D est de permettre le passage et la diffusion du rayonnement infrarouge notamment émis par le charbon de bois.

Selon la figure 2, la poêle à marron conforme à l'invention comporte également un manche 1 ainsi qu'un fond plein 2 destiné à être placé sur un réchaud quelconque et entouré sur la totalité de sa périphérie par une paroi 3 de faible hauteur.

Dans l'exemple de configuration représenté sur la figure, la paroi périphérique 3 comporte une ligne de discontinuité horizontale 30 la subdivisant en une partie inférieure 31 et une partie supérieure 32.

Le fond 2 de la poêle est équipé d'une série de nervures circulaires concentriques 4 séparées d'une distance a de l'ordre de 1 à 2 cm et largement similaires aux nervures dont sont traditionnellement équipés les grills. Le rôle de ces nervures 4 est de permettre aux marrons de rouler sur eux-mêmes lorsque l'on remue la poêle et à faire en sorte qu'ils ne reposent pas sur le fond 2 toujours par le même côté.

La partie inférieure 31 de la paroi périphérique 3 est quant à elle munie de perçages 5 de diamètre de l'ordre de 1 à 3 mm qui sont disposés en quinconce à proximité immédiate du fond 2.

Plus précisément, les perçages 5 sont répartis en séries 6 comportant chacune un perçage central 50 entouré de six perçages périphériques 51 uniformément répartis autour de lui.

La distance séparant un perçage central 50 des perçages périphériques 51 associés est de l'ordre de 1 à 3 mm. Les séries de perçages 6 sont quant à elles séparées d'une distance c de l'ordre de 1 à 3 cm.

Cette répartition et ce dimensionnement des perçages 5 sont de nature à permettre à une flamme de « lécher » la périphérie externe du bord 3 sans pénétrer à la partie interne de la poêle, de façon à créer un appel d'air et une ventilation autour des marrons de sorte que le rayonnement infrarouge émis par la flamme puisse compléter le grillage uniformément.

## Revendications

1. Poêle à marrons permettant de faire griller des marrons sur toutes les sources de chaleur, y compris le gaz,
**caractérisée en ce qu'**
elle est constituée par un ustensile métallique peu profond comportant un fond plein (2) entouré d'une paroi supérieure (3) munie de perçages (5) répartis sur la totalité de sa périphérie, situés à proximité immédiate du fond (2) et dimensionnés de façon à pouvoir être « léchés » par une flamme, en particulier la flamme d'un réchaud à gaz sans pénétration de celle-ci à la partie interne de la poêle, permettant ainsi de récupérer le rayonnement infrarouge de la flamme sans contact direct avec celle-ci.

2. Poêle à marrons selon la revendication 1,
**caractérisée en ce que**
les perçages (5) ont un diamètre de l'ordre de 1 à 3 mm.

3. Poêle à marrons selon l'une quelconque des revendications 1 et 2,
**caractérisée en ce que**
les perçages (5)sont disposés en quinconce.

4. Poêle à marrons selon la revendication 3,
**caractérisée en ce que**
les perçages (5) sont répartis en séries (6), chaque série comportant un perçage central (50) entouré de six perçages périphériques (51).

5. Poêle à marrons selon la revendication 4,
**caractérisée en ce que**
dans chaque série (6) les perçages périphériques (51) sont éloignés de 1 à 3 mm du perçage central (50).

6. Poêle à marrons selon l'une quelconque des revendications 4 et 5,
**caractérisée en ce que**
les séries (6) de perçages (5) sont distantes de 1 à 3 cm.

7. Poêle à marrons selon l'une quelconque des revendications 1 à 6,
**caractérisée en ce que**
le fond (2) est muni de bossages.

8. Poêle à marrons selon l'une quelconque des revendications 1 à 7,
**caractérisée en ce que**
le fond (2) est nervuré.

9. Poêle à marrons selon la revendication 8,
**caractérisée en ce que**
le fond (2) est muni de nervures circulaires concentriques (4) distantes d'environ 1 à 2 cm.

## Patentansprüche

1. Kastanienpfanne, geeignet zum Rösten von Kastanien (Maronen) auf allen Wärmequellen einschließlich Gas, **dadurch gekennzeichnet, dass** sie gebildet ist durch ein metallisches Küchengerät geringer Tiefe mit einem massiven Boden (2), umgeben von einer oberen Wand (3), die mit auf ihrem gesamten Umfang verteilten Bohrungen (5) versehen ist, die sich in unmittelbarer Nachbarschaft des Bodens (2) befinden und so bemessen sind, dass sie von einer Flamme "überstrichen" werden können, insbesondere von der Flamme eines Gasbrenners, ohne dass diese in den inneren Teil der Pfanne eindringt, wodurch die Infrarotstrahlung der Flamme ohne direkten Kontakt mit dieser genutzt werden kann.

2. Kastanienpfanne nach Anspruch 1, **dadurch gekennzeichnet, dass** die Bohrungen (5) einen Durchmesser in der Größenordnung von 1 bis 3 mm haben.

3. Kastanienpfanne nach einem der Ansprüche 1 und 2, **dadurch gekennzeichnet, dass** die Bohrungen (5) in Quincunxanordnung angeordnet sind.

4. Kastanienpfanne nach Anspruch 3, **dadurch gekennzeichnet, dass** die Bohrungen (5) in Serien (6) verteilt sind, wobei jede Serie eine zentrale Bohrung (50), umgeben von sechs peripheren Bohrungen (51), umfasst.

5. Kastanienpfanne nach Anspruch 4, **dadurch gekennzeichnet, dass** in jeder Serie (6) die peripheren Bohrungen (51) einen Abstand von 1 bis 3 mm zur zentralen Bohrung (50) haben.

6. Kastanienpfanne nach einem der Ansprüche 4 und 5, **dadurch gekennzeichnet, dass** die Serien (6) von Bohrungen (5) einen Abstand von 1 bis 3 cm haben.

7. Kastanienpfanne nach einem der Ansprüche 1 bis 6, **dadurch gekennzeichnet, dass** der Boden (2) mit Vorsprüngen versehen ist.

8. Kastanienpfanne nach einem der Ansprüche 1 bis 7, **dadurch gekennzeichnet, dass** der Boden (2) gerippt ist.

9. Kastanienpfanne nach Anspruch 8, **dadurch gekennzeichnet, dass** der Boden (2) mit konzentrischen kreisrunden Rippen (4) versehen ist, die einen Abstand von 1 bis 2 cm haben.

## Claims

1. Chestnut pan enabling chestnuts to be grilled on all sources of heat, including gas,
**characterised in that**
it consists of a shallow metal utensil comprising a solid base (2) surrounded by an upper wall (3) provided with holes (5) distributed around its entire periphery, disposed immediately adjacent to the base (2) and dimensioned so that they can be "licked" by a flame, in particular the flame of a gas burner, without the latter penetrating the internal part of the pan, thereby enabling the infrared radiation of the flame to be captured without being in direct contact with it.

2. Chestnut pan as claimed in claim 1,
**characterised in that**
the holes (5) have a diameter in the order of 1 to 3 mm.

3. Chestnut pan as claimed in any one of claims 1 and 2,
**characterised in that**
the holes (5) are disposed in a staggered arrangement.

4. Chestnut pan as claimed in claim 3,
**characterised in that**
the holes (5) are distributed in series (6), each series comprising a central hole (50) surrounded by six peripheral holes (51).

5. Chestnut pan as claimed in claim 4,
**characterised in that**
the peripheral holes (51) in each series (6) are spaced at a distance of from 1 to 3 mm from the central hole (50).

6. Chestnut pan as claimed in any one of claims 4 and 5,
**characterised in that**
the series (6) of holes (5) are spaced at a distance of from 1 to 3 cm.

7. Chestnut pan as claimed in any one of claims 1 to 6,
**characterised in that**
the base (2) is provided with bosses.

8. Chestnut pan as claimed in any one of claims 1 to 7,
**characterised in that**
the base (2) is ribbed.

9. Chestnut pan as claimed in claim 8,
**characterised in that**
the base (2) is provided with concentric circular ribs (4) spaced approximately 1 to 2 cm apart.
